# FASCICULE DE BREVET EUROPEEN

(11) **EP 4 432 157 B1**
(45) Date de publication et mention de la délivrance du brevet: **02.09.2026**
(21) Numéro de dépôt: 24191908.3
(22) Date de dépôt: 05.07.2022
(51) Int. Cl.: G06F 30/20, G06T 15/50, G01J 3/18, G01J 3/36, G06V 20/10, G01J 3/28, G06F 111/10, G06F 111/18

(54) **ÉQUIPEMENT D'ACQUISITION D'ENVIRONNEMENTS LUMINEUX MIS EN OEUVRE DANS UN SYSTÈME DE GÉNÉRATION D'IMAGES DE SYNTHÈSE PRÉDICTIVE**
LICHTUMGEBUNGSERFASSUNGSVORRICHTUNG IN EINEM SYSTEM ZUR ERZEUGUNG PRÄDIKTIVER SYNTHESEBILDER
EQUIPMENT FOR ACQUIRING LIGHT ENVIRONMENTS USED IN A SYSTEM FOR GENERATING PREDICTIVE SYNTHESIS IMAGES

(30) Priorité: 07.07.2021 FR 2107349
(43) Date de publication de la demande: 18.09.2024
(62) Numéro(s) de document de la (des) demande(s) initiale(s) en application de l'article 76 CBE: 22753724.8 / 4 367 599
(73) Titulaire: United Visual Researchers, 53001 Laval Cedex (FR)
(72) Inventeur: PORRAL, Philippe, 75014 PARIS (FR); MULLER, Thomas, 09200 ALOS (FR)
(74) Mandataire: IP Trust

(56) Documents cités:
- WO-A1-2021/108838
- CESMECI DAVUT ET AL: "Hyperspectral change detection by multi-band Census Transform", 2014 IEEE GEOSCIENCE AND REMOTE SENSING SYMPOSIUM, IEEE, 13 July 2014 (2014-07-13), pages 2969 - 2972, XP032674040, DOI: 10.1109/IGARSS.2014.6947100
- ANYMOUS: "Omen Simulation Suite", 31 December 2019 (2019-12-31), XP055898677, Retrieved from the Internet <URL:http://www.united-vr.com/wp-content/uploads/2019/09/UVR-One-Pager---OMEN-Simulation-Suite.pdf> [retrieved on 20220308]
- PORRAL PHILIPPE ET AL: "Iso Photographic Rendering", WORKSHOP ON MATERIAL APPEARANCE MODELING, 31 December 2018 (2018-12-31), XP055898959, Retrieved from the Internet <URL:https://diglib.eg.org/bitstream/handle/10.2312/mam20181192/011-014.pdf?sequence=1&isAllowed=y> [retrieved on 20220308], DOI: 10.2312/mam.20181192

## Description

### DOMAINE DE L'INVENTION

La présente invention concerne un équipement d'acquisition d'environnements lumineux implémenté dans un système de génération d'images de synthèse prédictive d'une scène réelle.

### ETAT DE LA TECHNIQUE

Il existe une demande considérable pour des outils numériques d'aide à la conception intégrant des simulations de scènes réelles qui soient les plus réalistes possibles pour les concepteurs. On parle alors de simulations physico-réalistes.

Les systèmes classiques de génération d'images virtuelles généralement conçus pour l'Industrie Créative fonctionnent dans le référentiel tri chromique RGB très éloigné de la réalité physique des interactions lumière/matière.

On peut citer des logiciels de simulation de systèmes optiques, tels que le logiciel SPEOS de la société Ansys, développé pour prédire l'illumination et les performances optiques de systèmes afin de gagner du temps et des coûts de prototypage, et le logiciel THEIA-RT de la même société, qui procure un rendu en temps réel basé sur la physique.

EP3526697A1 divulgue un procédé informatique de modélisation d'au moins une source de lumière, comprenant: une étape de réception de données d'entrée comprenant des données de caractéristiques des matériaux constituant la source de lumière; et une étape de création, à partir de données de caractéristiques des matériaux reçus, ainsi que de données géométriques et de données de caractéristiques d'émission lumineuse de la source lumineuse, un modèle de données représentant la lumière source, ces données géométriques décrivant la source de lumière et définissant une pluralité de volumes et de surfaces; dans lequel, lors de la création du modèle de données: les données es caractéristiques des matériaux sont liées aux volumes et aux surfaces des données géométriques, et aux données des caractéristiques d'émission lumineuse de la lumière la source sont liées aux surfaces des données géométriques; et une étape de stockage du modèle de données dans l'ordinateur.

On peut également citer le logiciel OCEAN développé par la société Eclat Digital, qui procure une simulation spectrale et polarisée pour du prototypage virtuel avec un rendu d'image photo-réaliste, ainsi que le logiciel 3D EXCITE développé par la société Dassault Systems qui fournir une solution de visualisation temps réel.

Pour autant, ces outils logiciels de simulation optique ne permettent pas encore une validation de l'aspect final du produit manufacturé. Il y a de fait rupture dans la chaîne de conception numérique et des recours à des maquettes physiques restent nécessaires ce qui augmentent considérablement les coûts et les délais.

Le document « Omen Simulation Suite », XP055898677 publié le 31 décembre 2019, divulgue un moteur de rendu iso-photographique pour une conception d'apparence assistée par ordinateur. Ce moteur, qui traite des données provenant de plusieurs sources de données, peut prédire comment des aspects de la lumière vont interagir avec un objet ou un matériau dans un environnement de lumière naturelle ou artificielle.

Le document « Iso Photographic Rendering », XP055898959 publié le 31 décembre 2018, divulgue un procédé de rendu iso-photographique mettant en œuvre une acquisition séquentielle d'images successivement filtrées par des filtres chromatiques et polarisants avec différents temps de pose. Dans ce procédé de rendu qui permet de recréer une image virtuelle visant à être identique à ce à quoi une vraie photographie aurait ressemblé, seules les données mesurées sont utilisées pour alimenter le moteur de rendu.

Le document « Cesmeci Davut et al : Hyperspectral change detection by multi-band Census Transform. 2014 IEEE Geoscience and remote sensing symposium, IEEE, 13 juillet 2014 (2014-07-13), pages 2969-2972, XP032674040,DOI : 10.1 109/IGARSS.2014.6947100 » divulgue un équipement d'imagerie spectrale panoramique utilisé pour capturer des données hyperspectrales multi-temporelles, mettant en œuvre une transformée de recensement multibande pour la détection de changements sur ces données.Le but de la présente invention est de dépasser les limitations des procédés de simulation existants et de procurer aux concepteurs un nouvel outil de simulation physico-réaliste d'une qualité telle qu'il puisse délivrer des simulations prédictives dites iso-photographiques d'une scène qui soient indiscernables par rapport à une photographie réelle de cette scène prise au même moment et dans les mêmes conditions.

### EXPOSE DE L'INVENTION

Cet objectif est atteint avec
un équipement pour acquérir des environnements lumineux d'une scène réelle, mis en œuvre dans un système de génération d'image de synthèse, comprenant une caméra hyper-spectrale pourvue d'un objectif grand angle, cette caméra comprenant un réseau de diffraction et des lignes de capture spectrale entrelacées avec des filtres polarisants linéaires permettant de déterminer, par pixel, les composantes du vecteur de Stokes, et étant disposée sur un plateau motorisé de façon à procurer une pluralité de positions angulaires.

Cet équipement d'acquisition d'environnements lumineux peut en outre comprendre des moyens pour synchroniser la rotation de la caméra avec les vitesses d'obturation en relation avec les temps d'intégration.

La caméra hyper-spectrale peut en outre être programmée pour effectuer une pluralité de captures consécutives d'une scène réelle présentant de hautes dynamiques lumineuses, à des vitesses différentes.

L'équipement d'acquisition d'environnements lumineux peut en outre comprendre des moyens locaux pour stocker temporairement des données de capture d'une scène réelle.

### DEFINITIONS

Balance des blancs : réglage qui permet, sur un appareil de prise de vues électronique, d'adapter la dominante de couleur à l'éclairage
Courbe gamma : La caractéristique de transfert d'un transducteur optique électronique
Environnement lumineux : Image omnidirectionnelle (360 x 360 degrés) mémorisant l'illumination incidente en un point particulier de l'espace.

Imagerie hyper-spectrale : technologie permettant d'obtenir l'image d'une scène dans un grand nombre de bandes spectrales à la fois étroites et contigües
Image Raw : désignation générique d'un type de fichier d'images numériques issues d'appareils photo numériques ou de scanners. Un fichier Raw contient les données brutes du capteur et les paramètres nécessaires à la transformation en fichier image visible sur écran
Image de synthèse : Image créée par un ordinateur à partir d'un modèle numérique
Isophotographie :Image de synthèse indiscernable d'une photographie prise au même moment dans les mêmes conditions
Réflectance d'un matériau : Proportion de lumière réfléchie par la surface du matériau

### DESCRIPTION DES FIGURES

- La Figure 1 est un synoptique illustrant un exemple de réalisation d'un procédé de génération d'image de synthèse prédictive selon l'invention ;
- La Figure 2 illustre un processus de comparaison entre une photo réelle et une photo prédite par le procédé de génération selon l'invention ;
- La Figure 3 illustre un exemple d'un processus connu de dématriçage d'une image Raw, mis en œuvre dans le procédé de génération d'image selon l'invention
- La Figure 4 illustre un exemple d'un algorithme de traitement implémentant le procédé de génération d'image selon l'invention ; et
- La Figure 5 est un schéma représentant un équipement d'acquisition d'environnements lumineux mis en œuvre dans un système de génération d'image selon l'invention.

### DESCRIPTION DETAILLEE

### Exemple de réalisation d'un système de génération d'images de synthèse prédictive

L'apparence optique d'un objet provient de l'interaction entre la lumière et la matière qui traduit comment un objet capte la lumière et comment il la réémet. La caractérisation complète de l'apparence visuelle d'un objet modulée par sa forme (géométrie, texture, rugosité,...) et par sa nature (transparence, translucidité, couleur,..), nécessite un ensemble de mesures physiques pour quantifier les variations spectrales, angulaires et spatiales de la lumière réfléchie ou transmise par l'objet.

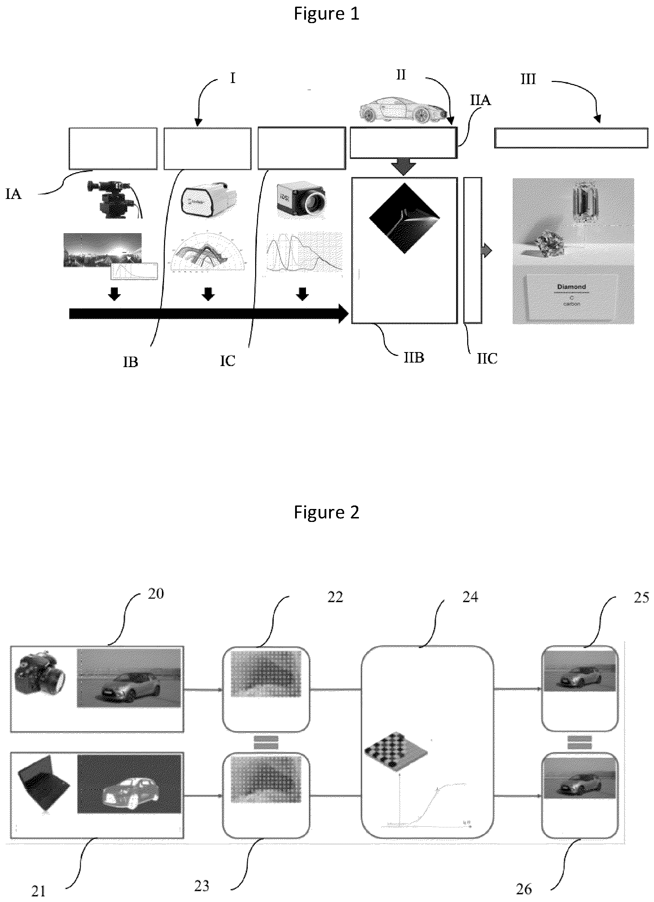

En référence à la Figure 1, un procédé de génération d'une image de synthèse prédictive comprend une première séquence I d'acquisition d'environnements lumineux d'une scène réelle comprenant des mesures physiques de ces environnements, une seconde séquence II de traitement des données de mesures physiques pour développer et délivrer des isophotographies, puis une séquence III de visualisation de ces isophotographies.

La séquence I d'acquisition d'environnements lumineux comprend des mesures IA d'émittance, des mesures IB de réflectance de matériaux mis en œuvre dans la scène réelle, et des mesures IC de réponse spectrale.

Grâce à la séquence I, le procédé de génération d'image de synthèse prédictive présente procure une description des phénomènes d'interaction lumière/matière la plus exhaustive et précise possible. Tous les phénomènes physiques en cause sont pris en considération : spatial, spectral et polarisation.

La séquence II de traitement des données de mesures physiques comprend une exploitation IIA d'une géométrie 3D de la scène réelle dans un moteur IIB de rendu prédictif basé sur les mesures et un développement IIC d'isophotographies.

On va maintenant décrire, en référence à la figure 2, un exemple pratique de mise en œuvre du procédé de synthèse d'images prédictives, avec une comparaison entre photographie réelle et photographie prédictive.

A partir d'une prise de photographie réelle 20 d'une scène réelle, on obtient 22 une image brute capturée. On réalise en parallèle 21 une simulation isophotographique de cette scène réelle, qui conduit à une image brute simulée 23. Ces deux images brutes respectivement capturée et simulées 22,23 sont traitées 24 par un processus de développement numérique et de démosaïcage.

Il est à noter que le démosaïcage, aussi connu sous le nom de dématriçage, est une des phases du traitement du signal brut issu du capteur d'un appareil photographique numérique. Il consiste à interpoler les données de chacun des photosites monochromes rouge, vert et bleu composant le capteur électronique pour obtenir une valeur trichrome pour chaque pixel.

La mosaïque de Bayer, comportant une moitié de capteurs à filtre vert disposés en quinconce, séparés par des capteurs à filtre alternativement rouge et bleu, est la disposition la plus courante pour les capteurs couleur. Le démosaïcage ou dématriçage est l'opération de base du traitement de l'image ; il s'accompagne souvent d'opérations correctives. Il se fait dans l'appareil et, si on a enregistré un fichier Raw, avec un logiciel spécialisé, tenant compte des caractéristiques de l'appareil.

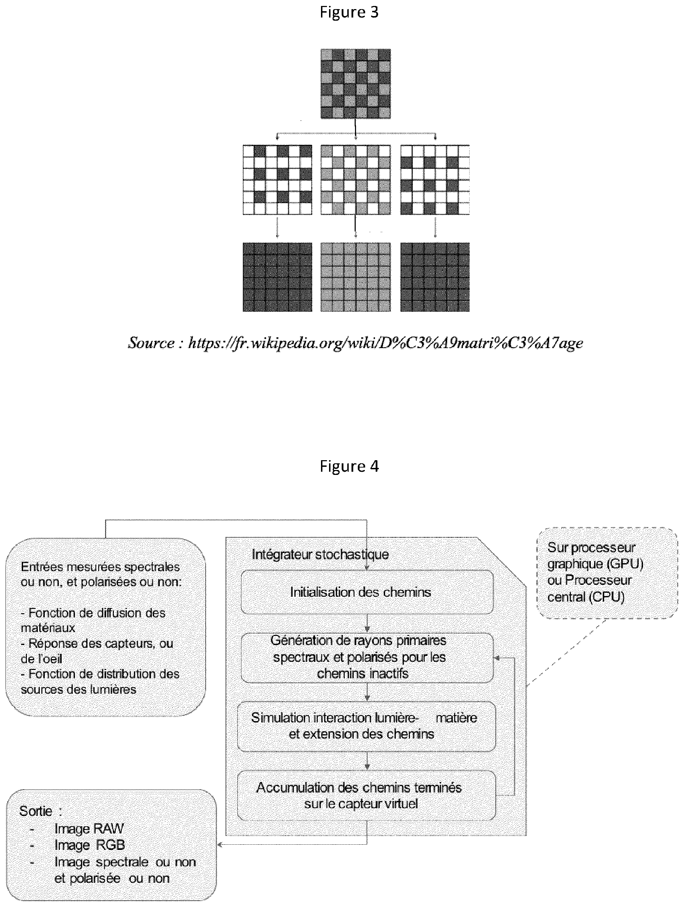

Ainsi, en référence à la figure 3, dans le cas d'une photographie couleur (ou d'une isophotographie couleur), l'image Raw est une image en niveau de pixel matricée. Affichée à l'écran, elle apparait en niveau de gris. Pour former l'image couleur, on peut appliquer un processus connu de dématriçage qui permet d'obtenir une image composée de trois canaux rouge, vert et bleu par pixel.

On applique aux images brutes une courbe gamma et on réalise une balance des blancs. On obtient alors une photographie réelle 25 à comparer avec une photographie prédite 26.

En référence à la figure 4, l'ensemble des étapes de traitement qui viennent d'être décrites pour mettre en œuvre le procédé de génération d'image est réalisé sous la forme d'un algorithme implémenté dans un processeur graphique (GPU) ou un processeur central (CPU). Cet algorithme reçoit des informations d'entrée mesurées, spectrales ou non, polarisées ou non, notamment une ou plusieurs fonctions de diffusion des matériaux, une ou plusieurs réponses des capteurs ou de l'œil, une ou plusieurs fonctions de distribution des sources de lumière.

Cet algorithme implémente un intégrateur stochastique et réalise les opérations suivantes :
- initialisation des chemins,
- génération de rayons primaires spectraux et polarisés pour les chemins inactifs,
- simulation de l'interaction lumière-matière et extension des chemins,
- accumulation des chemins terminés sur le capteur virtuel.

L'algorithme de traitement délivre en sortie une image Raw, une image RGB et une image spectrale ou non et polarisée ou non.

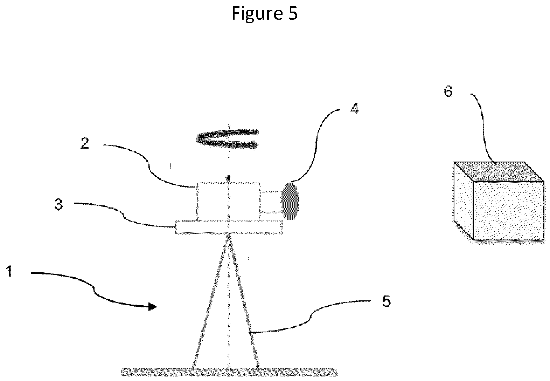

Un équipement d'acquisition d'environnements lumineux 1, dédié à la collecte des mesures nécessaires pour la génération d'images de synthèse prédictives d'une scène réelle 6, comprend, en référence à la figure 5, une caméra hyper-spectrale 2 pourvue d'un objectif grand-angle 4 , par exemple de type « Fish-Eye » et fixée à une plateforme motorisée 3 équipée de capteurs de position angulaire (non représentés) et pourvu d'un système de pieds 5. Cet équipement est dénommé dans la suite DSP pour « Digital Spectral Polarimeter ». IL permet l'identification et la quantification de la totalité les informations qui influencent l'intensité des phénomènes de réflexion et de transmission.

L'imagerie hyper-spectrale (HSI) est une technologie qui combine l'imagerie spatiale 2D et la spectroscopie pour fournir des informations détaillées sur la composition d'une cible. Elle permet l'acquisition d'informations spectrales résolues spatialement sous formes de nombreuses bandes de longueurs d'ondes étroites et contiguës. Chaque pixel de l'image résultante contient un spectre complet.

Une des principales méthodes d'acquisition de données hyper-spectrales est la technique connue dite du « *pushbroom* ». En utilisant une ouverture de fente linéaire et un élément optique diffractif, les informations spectrales peuvent être acquises ligne par ligne au moyen d'un balayage spatial. Traditionnellement la cartographie des images hyper-spectrales est réalisée en déplaçant l'objet ou la caméra en translation. Les informations spatiales et spectrales acquises forment un ensemble de données 3D présentées sous forme d'un cube, souvent appelé « Cube hyper-spectral ». Les dimensions dans ces cubes sont celles de l'espace (axes x et y) et la troisième est la dimension spectrale (z), correspondant à l'intensité lumineuse en fonction de la longueur d'onde.

Pendant le calcul, on réalise une interpolation linéaire entre les points ou les directions d'échantillonnage.

### Exemple de réalisation d'un dispositif DSP

Dans un exemple pratique de réalisation d'un dispositif DSP, la caméra hyper spectrale utilisée est commercialisée par la société Resonon (https://resonon.com/hyperspectral-cameras) et le modèle retenu est : PIKA L.

La platine de rotation motorisée utilisée dans cet exemple de réalisation est commercialisée par la société Newport (https://www.newport.com), avec une plage angulaire de 360°, une vitesse maximale de 40°.s⁻¹, et une précision de ± 15 mdeg.

La caméra hyper spectrale, équipée d'un objectif Fish Eye 4 prévu sans aberration chromatique et non polarisant, est composée de deux systèmes optiques distincts :
- un réseau de diffraction permettant la séparation chromatique
- un capteur CCD ou CMOS enregistrant l'information.

Ce première réseau de diffraction est du type par transmission de type VPH (Volume Phase Gratings), qui ne modifie pas la polarisation entrante. Pour de plus amples informations sur ce type de réseau de diffraction, on peut consulter le site suivant https://wasatchphotonics.com/technologies/volume-phase-holographic-gratings/
Le capteur peut être par exemple un capteur CMOS de référence IMX250 commercialisé par SONY. Les lignes de captures spectrales sont entrelacées. (Une ligne avec les filtres -45° et 0° et une seconde avec les filtres 90° et 45°). Un post-traitement spécifique est nécessaire et de fait les dimensions spectrales et spatiales sont divisées par 2 par rapport au système initial.

Connaissant les informations spectrales filtrées en polarisation linéaire, il est possible de déterminer les composantes du vecteur de *Stokes* nécessaires aux simulations de scène réelle Cependant, les composantes indicatrices des angles de polarisations sont dépendantes des repères dans lesquels elles sont calculées. Ces informations sont ensuite transformées dans un repère fixe.

La rotation de la caméra hyper-spectrale 2 est synchronisée avec les vitesses d'obturation en relation avec les temps d'intégration. La rotation doit être la plus rapide possible afin de diminuer le temps d'intégration et éviter les "flous" de mouvements liés aux objets mobiles de la scène, en restant dans les limites de l'efficacité quantique du capteur.

La dynamique radiométrique d'un environnement naturel peut être très élevée, en particulier en présence du soleil et de zones d'ombre. Pour couvrir l'ensemble de la dynamique de la scène, plusieurs captures consécutives à des vitesses différentes peuvent être nécessaires.

### Exemple de réalisation d'un moteur de rendu prédictif

Le moteur de rendu prédictif, dénommé OMEN Render, est un outil logiciel de simulation, totalement spectral et polarisé, développé sur les techniques et architecture informatiques les plus récentes et respectant dans son fonctionnement la totalité des lois de la physique. Sa fonction est de générer des images prédictives, au plus proche de la réalité, de ce que sera le produit à venir. Ce moteur de rendu prédictif est iso-photographique, prédictif et répétable. Il peut intégrer des outils de réalité virtuelle, et implémenter des calculs haute performance (HPC) procurant des temps de calcul de l'ordre de la seconde (avec un cluster de 128 GPU) à comparer avec des temps de plusieurs minutes avec un ordinateur standard.

Le principe général du moteur de rendu prédictif mis en œuvre dans un système de génération d'images de synthèse prédictive est l'acquisition par valeurs ou par bandes de longueur d'onde de séries d'images spectrales fournissant l'intensité et les états de polarisation de la lumière incidente. La répartition spatiale sphérique est liée à l'utilisation d'un objectif grand angle, type fish-eye, produisant des images circulaires. Un ajout de filtres polarisants permet une détermination, par pixel, des vecteurs de *Stokes,* Ces données physiques sont nécessaires et suffisantes pour caractériser l'éclairement d'un objet dans un environnement réel distant.

Le moteur de rendu prédictif peut tenir compte de nombreux phénomènes optiques, habituellement ignorés dans les moteurs de rendu de l'état de l'art, tels que la dispersion spectrale de l'illuminant, la polarisation.

Les données issues du système DSP permettent un traitement d'image avec un pas de l'ordre du nanomètre. Cette précision garantit aux utilisateurs que les images virtuelles seront des représentations fidèles voire exactes.

L'outil de Conception de l'Apparence Assistée par Ordinateur CA²O que permet le procédé de génération d'images de synthèse prédictive, vient avantageusement compléter les outils existants de CFAO (Conception Fabrication Assistée par ordinateur).

Bien entendu, la présente invention n'est pas limitée aux exemples de réalisation qui viennent d'être décrits et on peut prévoir bien d'autres modes de réalisation sans sortir du cadre de l'invention.

## Revendications

1. Equipement pour acquérir des environnements lumineux d'une scène réelle, mis en œuvre dans un système de génération d'image de synthèse, ledit équipement d'acquisition d'environnements lumineux comprenant une caméra hyper-spectrale (2) pourvue de moyens optiques de mesures physiques comprenant un objectif grand angle, cette caméra (2) comprenant un réseau de diffraction et des lignes de capture spectrale entrelacées avec des filtres polarisants linéaires permettant de déterminer, par pixel, les composantes du vecteur de Stokes, et étant disposée sur un plateau motorisé (3) de façon à procurer une pluralité de positions angulaires de prise de vue de la scène réelle,
ledit équipement d'acquisition d'environnements lumineux étant prévu pour délivrer des données de mesures physiques en relation avec ladite scène réelle, à des moyens de traitement desdites données de mesures physiques de façon à délivrer des informations de caractérisation physique de ladite scène réelle.

2. Equipement d'acquisition d'environnements lumineux selon la revendication précédente, **caractérisé en ce qu'**il comprend en outre des moyens pour synchroniser la rotation de la caméra (2) avec les vitesses d'obturation en relation avec les temps d'intégration.

3. Equipement d'acquisition d'environnements lumineux selon l'une des deux revendications précédentes, **caractérisé en ce que** la caméra (2) est programmée pour effectuer une pluralité de captures consécutives d'une scène réelle présentant de hautes dynamiques lumineuses, à des vitesses différentes.

4. Equipement d'acquisition d'environnements lumineux selon la revendication précédente, **caractérisé en ce qu'**il comprend en outre des moyens locaux pour stocker temporairement des données de capture d'une scène réelle.

5. Equipement d'acquisition d'environnements lumineux selon l'une quelconque des revendications précédentes, **caractérisé en ce que** les moyens optiques de mesures physiques et les moyens de traitement des données de mesures physiques sont intégrés au sein d'un dispositif polarimètre spectral (DSP).

## Patentansprüche

1. Einrichtung zum Erfassen von Lichtumgebungen einer realen Szene, die in einem System zum Erzeugen von synthetischen Bildern eingesetzt wird, die Einrichtung zum Erfassen von Lichtumgebungen umfassend eine Hyperspektralkamera (2), die mit optischen Mitteln für physikalische Messungen versehen ist, umfassend ein Weitwinkelobjektiv, diese Kamera (2) umfassend ein Beugungsgitter und Spektralaufnahmelinien, die mit linearen Polarisationsfiltern verschachtelt sind, die es ermöglichen, pro Pixel die Komponenten des Stokes-Vektors zu bestimmen, und auf einer motorisierten Plattform (3) angeordnet ist, um eine Vielzahl von Winkelpositionen für eine Bildaufnahme der realen Szene bereitzustellen,
wobei die Einrichtung zum Erfassen von Lichtumgebungen zum Liefern von physikalischen Messdaten in Bezug auf die reale Szene an Mittel zum Verarbeiten der physikalischen Messdaten vorgesehen sind, um Informationen zum physikalischen Charakterisieren der realen Szene zu liefern.

2. Einrichtung zum Erfassen von Lichtumgebungen nach dem vorstehenden Anspruch, **dadurch gekennzeichnet, dass** sie ferner Mittel zum Synchronisieren der Drehung der Kamera (2) mit den Verschlussgeschwindigkeiten in Bezug auf die Integrationszeiten umfasst.

3. Einrichtung zum Erfassen von Lichtumgebungen nach einem der zwei vorstehenden Ansprüche, **dadurch gekennzeichnet, dass** die Kamera (2) zum Durchführen einer Vielzahl von aufeinanderfolgenden Aufnahmen einer realen Szene, die hohe Lichtdynamiken aufweist, mit unterschiedlichen Geschwindigkeiten programmiert ist.

4. Einrichtung zum Erfassen von Lichtumgebungen nach dem vorstehenden Anspruch, **dadurch gekennzeichnet, dass** sie ferner lokale Mittel zum temporären Speichern von Aufnahmedaten einer realen Szene umfasst.

5. Einrichtung zum Erfassen von Lichtumgebungen nach einem der vorstehenden Ansprüche, **dadurch gekennzeichnet, dass** die optischen Mittel für physikalische Messungen und die Mittel zum Verarbeiten der physikalischen Messdaten in einer Vorrichtung für spektrale Polarimetrie (DSP) integriert sind.

## Claims

1. Equipment for acquiring lighting environments of a real scene, implemented in a synthetic image generation system, said lighting environment acquisition equipment comprising a hyper-spectral camera (2) provided with optical physical measurement means comprising a wide-angle lens, this camera (2) comprising a diffraction grating and spectral capture lines interlaced with linear polarizing filters enabling the components of the Stokes vector to be determined per pixel, and being arranged on a motorized platform (3) so as to provide a plurality of angular positions for capturing the real scene,
said lighting environment acquisition equipment being intended to supply physical measurement data relating to said real scene to means for processing said physical measurement data so as to supply physical characterization information of said real scene.

2. Lighting environment acquisition equipment according to the preceding claim, **characterized in that** it further comprises means for synchronizing the rotation of the camera (2) with the shutter speeds in relation to the integration times.

3. Lighting environment acquisition equipment according to one of the two preceding claims, **characterized in that** the camera (2) is programmed to perform a plurality of consecutive captures of a real scene presenting high lighting dynamics, at different speeds.

4. Lighting environment acquisition equipment according to the preceding claim, **characterized in that** it further comprises local means for temporarily storing capture data of a real scene.

5. Lighting environment acquisition equipment according to any of the preceding claims, **characterized in that** the optical physical measurement means and the physical measurement data processing means are integrated within a spectral polarimeter device (DSP).
